# EUROPEAN PATENT SPECIFICATION

(11) **EP 2 574 825 B1**
(45) Date of publication and mention of the grant of the patent: **05.07.2017**
(21) Application number: 12790318.5
(22) Date of filing: 08.05.2012
(51) Int. Cl.: F16H 7/08, F02B 61/02, F02B 67/06

(54) **ENGINE AND SADDLE-TYPE VEHICLE**
MOTOR UND SATTELFAHRZEUG
MOTEUR, ET VÉHICULE À SELLE

(30) Priority: 20.05.2011 JP 2011114077
(43) Date of publication of application: 03.04.2013
(73) Proprietor: Yamaha Hatsudoki Kabushiki Kaisha, Iwata-shi, Shizuoka 438-8501 (JP)
(72) Inventor: INOMORI Toshinori, Iwata-shi Shizuoka 438-8501 (JP); NAKAJIMA Akitoshi, Iwata-shi Shizuoka 438-8501 (JP)
(74) Representative: Grünecker Patent- und Rechtsanwälte PartG mbB
(86) International application number: PCT/JP2012/061762
(87) International publication number: WO 2012/160959

(56) References cited:
- EP-A2- 1 008 783
- EP-A2- 1 707 849
- WO-A1-97/33104
- JP-A- 9 195 845
- JP-A- S5 612 007
- JP-A- S63 243 415
- JP-A- 2001 153 192
- JP-A- 2009 228 673
- JP-U- S6 032 501
- JP-U- S6 249 045
- JP-U- S61 138 803
- US-A1- 2007 004 544

## Description

### Technical Field

The present invention relates to an engine and a saddle riding type vehicle. The invention more specifically relates to a structure of a tensioner that provides tension to a cam chain.

### Background Art

A motorcycle is known as a kind of saddle riding type vehicle. An engine provided in the motorcycle is for example disclosed by JP-A 2009-228673. In the engine disclosed by JP-A 2009-228673, motive power from a crankshaft is transmitted to a camshaft through a cam chain.

A cam chain is provided in a chain chamber. The chain chamber is formed over a crankcase, a cylinder body, and a cylinder head. The cam chain is provided with tension so that it is not loose. The engine disclosed by JP-A 2009-228673 includes a tensioner used to press a chain guide against a cam chain. The tensioner provides tension to the cam chain.

### Summary

The engine disclosed in JP-A 2009-228673 includes the tensioner as well as a cam chain guide, which increases the number of necessary parts. WO 97/33104 A1 discloses a mechanical chain tensioner for automotive engine timing drives, showing the features of the preamble of claim 1.

It is an object of the present invention to provide an engine capable of providing a cam chain with tension with a reduced number of parts and a saddle riding type vehicle including the engine.

An engine according to the present invention is an engine having a chain chamber and includes a crankshaft, a camshaft, a first sprocket attached to the crankshaft, a second sprocket attached to the camshaft, a crankcase that stores the first sprocket, a cylinder body attached to the crankcase, a cylinder head attached to the cylinder body to store the second sprocket, a chain wrapped around the first and second sprockets, and a tension providing member that provides the chain with tension. The crankcase, the cylinder body, and the cylinder head form the chain chamber that stores the chain and the tension providing member. The tension providing member includes a plate spring member and a contact member that supports the plate spring member and contacts the chain in the chain chamber. The engine further includes a support shaft inserted through a support hole formed at the contact member to support the tension providing member in a swingable manner, and a support part that supports the tension providing member by contacting a supported part formed at the contact member. The support part supports the supported part so that the supported part can slide in the chain chamber when the tension providing member swings around the support shaft. The support part comprises a support surface contacted by the supported part; and a pair of opposite walls provided to have the tension providing member therebetween, the support surface extending between the opposite walls and the support surface and the pair of opposite walls being provided integrally. The support part is integrally formed with one of the cylinder body and the cylinder head.

The engine according to the present invention can provide a cam chain with tension with a reduced number of parts.

### Brief Description of Drawings

FIG. 1 is a left side view of an overall structure of a motorcycle according to a first embodiment of the present invention.
FIG. 2 is a top sectional view of a front part of a power unit in the motorcycle shown in Fig. 1.
FIG. 3 is a top sectional view of a rear part of the power unit in the motorcycle shown in Fig. 1.
FIG. 4 is a partly sectional view of a chain chamber as viewed from the left.
Fig. 5 is a top sectional view showing a part of Fig. 2 being enlarged.
Fig. 6 is a sectional view taken along VI-VI in Fig. 5.
Fig. 7 is a top sectional view showing an attachment structure of a tensioner.
Fig. 8 is a left side sectional view showing a part of Fig. 4 being enlarged.
Fig. 9 is a sectional view taken along IX-IX in Fig. 8.
Fig. 10 is a sectional view of a chain chamber according to a second embodiment of the present invention.
Fig. 11 is a partly sectional view of a chain chamber according to a third embodiment of the present invention as viewed from the left.

### Mode for Carrying Out the Invention

### First Embodiment

Now, a motorcycle 10 according to a first embodiment of the present invention will be described in conjunction with the accompanying drawings. According to the embodiment, a scooter type motorcycle will be described as an example of the motorcycle 10. In the drawings, the same or corresponding portions are designated by the same reference characters and their description will not be repeated.

### Overall Structure

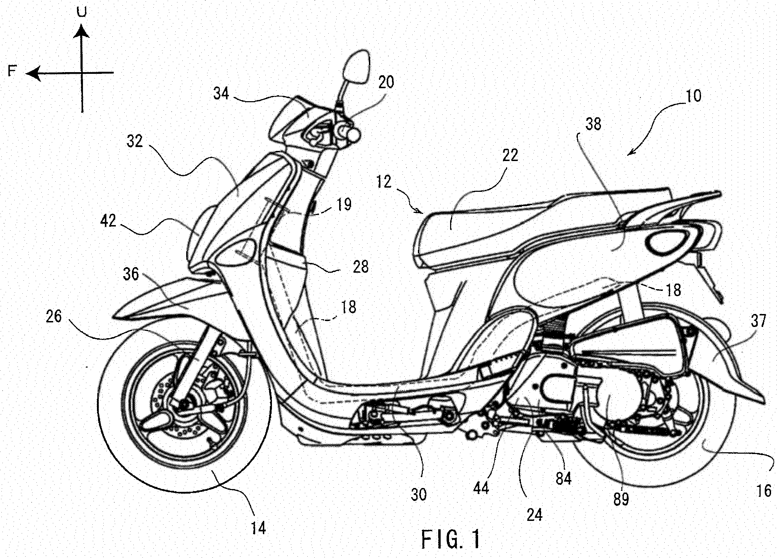

Fig. 1 is a left side view of the motorcycle 10 according to the first embodiment of the present invention. In the following description, the front, back, left, and right refer to these directions as viewed from a rider seated on the seat 22 of the motorcycle 10. In the drawings, the arrow F indicates the forward direction of the motorcycle 10 and the arrow U indicates the upward direction of the motorcycle 10.

The motorcycle 10 includes a vehicle main body 12, a front wheel 14 provided at a front part of the motorcycle 10, and a rear wheel 16 provided at a rear part of the motorcycle 10.

The vehicle main body 12 mainly includes a vehicle body frame 18, a handle 20, the seat 22, and a power unit 24.

The vehicle body frame 18 supports the power unit 24, the seat 22, and the like. The vehicle body frame 18 is depicted by a dashed line in Fig. 1. The vehicle body frame 18 has a head pipe 19. The head pipe 19 has a steering shaft inserted therein in a rotatable manner. The handle 20 is attached at an upper end of the steering shaft. A front fork 26 is attached at both ends of the steering shaft. The front wheel 14 is attached at a lower end of the front fork 26 in a rotatable manner. The vehicle body frame 18 is made of a metal having high rigidity such as steel.

The vehicle body frame 18 is covered with a vehicle body cover 28. The vehicle body cover 28 is made of resin. The vehicle body cover 28 has a footboard 30, a front cover 32, a handle cover 34, a front fender 36, a rear fender 37, and a side cover 38.

The footboard 30 is provided under the seat 22. The footboard 30 extends in the front-back direction.

The front cover 32 is provided in front of the seat 22. The front cover 32 is provided to cover the head pipe 19. The front cover 32 is provided with a head light 42.

The handle cover 34 covers a part of the handle 20. The handle cover 34 is provided above the front cover 32. The handle cover 34 is provided with a panel used to indicate various measuring instrument such as a speed meter, not shown.

The front fender 36 is provided above the front wheel 14. The front fender 36 is provided under the front cover 32. The front fender 36 is provided to protrude ahead of the front cover 32.

The side cover 38 is provided under the seat 22. The side cover 38 is positioned above the rear wheel 16. The rear fender 37 is provided above the rear wheel 16. The side cover 38 extends backward from under the seat 22.

The handle 20 is provided ahead of a rider seated on the seat 22. The handle 20 extends in the left-right direction. Grips that can be held by a rider are provided at the ends of the handle 20.

The seat 22 is provided above the power unit 24. There is a storage space capable of storing a helmet or the like under the seat 22.

The power unit 24 is provided in the vicinity of the rear wheel 16. The power unit 24 is supported swingably in the up-down direction with respect to the vehicle body frame 18. The engine 44, a crankcase 84 and a mission case 89 included in the power unit 24 are exposed from the vehicle body cover 28. The power unit 24 will be described in detail.

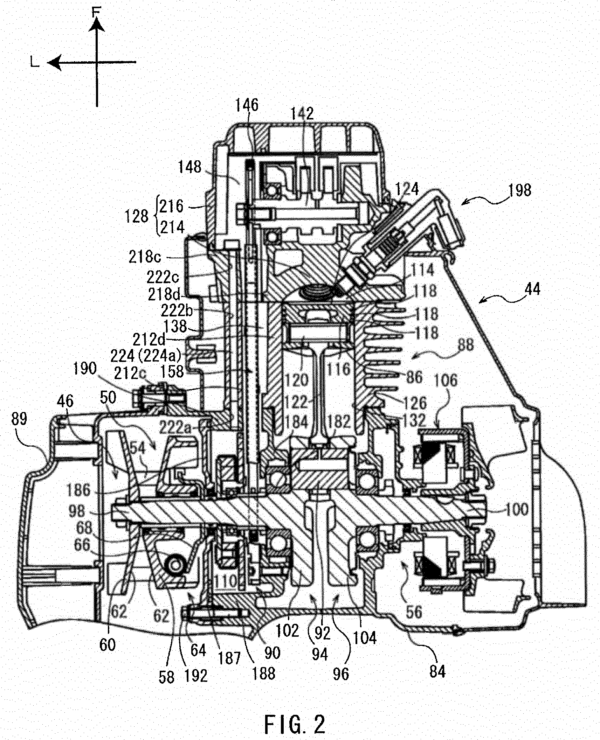

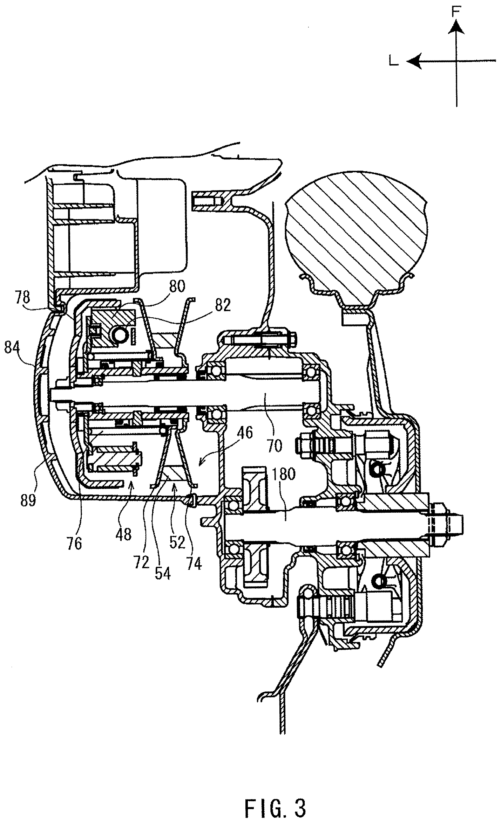

Referring to Figs. 2 and 3, the power unit 24 will be described. Fig. 2 is a top sectional view showing inside the engine 44 and the crankcase 84 in the power unit 24. Fig. 3 is a top sectional view of a structure of a transmission 46 in the power unit 24. Fig. 3 shows a rear structure of Fig 2. In Figs. 2 and 3, the arrow F indicates the forward direction of the vehicle and the arrow L indicates the leftward direction of the vehicle.

The power unit 24 is a swing arm type power unit. The power unit 24 mainly includes the engine 44 (Fig. 2), the transmission 46 (Figs. 2 and 3) provided on the left side of the engine 44, and a centrifugal clutch 48 (Fig. 3) provided on the left side of the transmission 46.

The transmission 46 is a continuously variable transmission using a V belt 54. The transmission 46 has a driving pulley 50, a driven pulley 52, and the V belt 54.

As shown in Fig. 2, the driving pulley 50 is attached at a left end of the crankshaft 56 provided in the engine 44. The driving pulley 50 has a first driving pulley 58 and a second driving pulley 60. The first driving pulley 58 is provided opposed to the second driving pulley 60. The second driving pulley 60 is provided on the left side of the first driving pulley 58. The first and second driving pulleys 58 and 60 have inclination surfaces 62 that gradually part from each other in the outer circumferential direction. The driving pulley 50 is provided with an interval control mechanism 64 used to control the interval between the first and second driving pulleys 58 and 60.

The interval control mechanism 64 has a plurality of weight rollers 66 and a disk member 68 provided on the right side of the first driving pulley 58. The disk member 68 is made of a material having high rigidity. As the rotation speed of the crankshaft 56 increases and the weight rollers 66 move to the outer circumferential side, the first driving pulley 58 is moved by the weight rollers 66 to the side of the second driving pulley 60.

Referring to Fig. 3, the driven pulley 52 will be described. Note that Fig. 3 shows the centrifugal clutch 48 and the transmission 46.

The driven pulley 52 is provided with motive power transmitted from the driving pulley 50 to rotate. The driven pulley 52 is attached to a first output shaft 70 arranged parallel to the crankshaft 56. The driven pulley 52 has a first driven pulley 72 and a second driven pulley 74 provided on the right side of the first driven pulley 72. Force is applied in the rightward direction in Fig. 3 from a spring 76 supported at a plate of the centrifugal clutch 48 so that the first driven pulley 72 moves closer to the second driven pulley 74.

The V belt 54 transmits the motive power of the driving pulley 50 to the driven pulley 52. The V belt 54 is provided to extend over the driving pulley 50 and the driven pulley 52. More specifically, the V belt 54 is held between the first driving pulley 58 and the second driving pulley 60 and between the first driven pulley 72 and the second driven pulley 74.

The centrifugal clutch 48 is connected to the left side of the driven pulley 52 of the transmission 46. The centrifugal clutch 48 is provided at one end of the first output shaft 70. The centrifugal clutch 48 mainly has a clutch housing 78, a clutch shoe 80, and a clutch spring 82. As the rotating speed of the driving pulley 50 increases, the rotation speed of the clutch shoe 80 increases. The clutch shoe 80 is pressed against the clutch housing 78 due to centrifugal force, and the rotation force of the clutch shoe 80 is transmitted to the clutch housing 78. The motive power transmitted to the clutch housing 78 is transmitted to the first output shaft 70 connected to the clutch housing 78.

A second output shaft 180 connected with the rear wheel 16 is provided behind the first output shaft 70. The first output shaft 70 and the second output shaft 180 can be provided with the transmitted motive power through a gear that is not shown.

### Engine

Now, mainly referring to Fig. 2, the engine 44 will be described in detail.

The engine 44 is a device that generates motive power for the motorcycle 10. The engine 44 is an air-cooling type engine. The engine 44 mainly includes a crankshaft 56, a crankcase 84, a cylinder 88, a piston 86, and a motive power transmission mechanism 90. The piston 86 is provided in front of the crankshaft 56. The motive power transmission mechanism 90 is provided on the left side of the piston 86.

The crankshaft 56 is provided with motive power transmitted from the piston 86 and rotates. The crankshaft 56 mainly has a crank pin 92, a first crank web 94, a second crank web 96, a first crankshaft 98, and a second crankshaft 100.

The crank pin 92 connects the crankshaft 56 and a connecting rod 122 of the piston 86.

The first crank web 94 supports the crank pin 92. The first crank web 94 is provided with a weight 102 used to reduce inertial force generated by the vibration of the piston 86 and the connecting rod 122. The first crank web 94 is a flat plate type member.

The second crank web 96 supports the crank pin 92. The second crank web 96 is provided to oppose the first crank web 94. The second crank web 96 is provided with a weight 104 used to reduce inertial force generated by the vibration of the piston 86 and the connecting rod 122. The second crank web 96 is a flat plate type member.

The first crankshaft 98 is connected to the first crank web 94. The first crankshaft 98 extends in an approximately orthogonal direction from the first crank web 94. The driving pulley 50 of the transmission 46 is provided at a tip end of the first crankshaft 98.

The second crankshaft 100 is connected to the second crank web 96. The second crankshaft 100 extends in an approximately orthogonal direction from the second crank web 96. A generator 106 is provided at a tip end of the second crankshaft 100. The generator 106 generates electric power.

The crankcase 84 supports the crankshaft 56 through a bearing. The mission case 89 is provided behind the crankcase 84. The transmission 46 and the like are stored in the mission case 89.

The cylinder 88 guides the linear reciprocating movement of the piston 86. The cylinder 88 has a cylinder body 126 and a cylinder head 128.

The cylinder body 126 is provided with a cylinder bore 132 having a circular cross section. The piston 86 is provided at the cylinder bore 132 of the cylinder body 126. The advancing direction of the piston 86 is guided by the cylinder bore 132. The cylinder body 126 is attached to the crankcase 84.

The cylinder head 128 is attached to the cylinder body 126. More specifically, the cylinder head 128 is provided to oppose the crankcase 84 with the cylinder body 126 therebetween. The cylinder head 128 is provided with a wall surface that forms a combustion chamber 144 continuous with the cylinder bore 132 of the cylinder body 126. The combustion chamber 114 is provided with a plurality of holes (not shown) connected to the outside of the combustion chamber 114. A valve (not shown) is provided at each of the holes and the valve is driven when air is taken into/discharged from the combustion chamber 114. The combustion chamber 114 is provided with a fuel supply device (not shown) used to supply fuel to the combustion chamber 114. The cylinder head 128 is provided with an ignition device 198 used to ignite an air-fuel mixture in the combustion chamber 114. The cylinder head 128 is provided with the camshaft 142 used to drive the plurality of valves provided at the combustion chamber 114.

The piston 86 forms the combustion chamber 114 together with the cylinder head 128 of the engine 44. The piston 86 receives pressure from combustion gas in the combustion chamber 114 to rotate the crankshaft 56. The piston 86 is attached to the crankshaft 56. The piston 86 has a piston head 116, piston rings 118, the piston pin 120, and the connecting rod 122.

The piston head 116 has a disk shaped tip end surface 124 and a cylindrical part that extends backward in a vertical direction from the circumferential end of the tip end surface 124. The piston head 116 has a piston boss into which the piston pin 120 can be inserted at a side surface. Three ring grooves into which the piston rings 118 can be inserted are formed at a front side of the piston boss of the piston head 116. A valve relief is formed at the tip end surface 124 of the piston head 116.

The piston ring 118 has two compression rings and an oil ring. The compression rings are inserted into the two ring grooves closer to the tip end surface 124. The oil ring prevents fuel-air gas or combustion gas from being leaked from the gap between the piston 86 and the cylinder body 126 of the cylinder 88. The oil ring scrapes off oil at the guide wall of the cylinder body 126.

The piston pin 120 is inserted into the piston boss of the piston head 116 to connect the connecting rod 122 and the piston head 116.

The connecting rod 122 transmits the motion of the piston head 116 to the crankshaft 56. The connecting rod 122 is connected to the piston head 116 and the crankshaft 56. The connecting rod 122 has cylindrical holes at both ends into which the crank pin 92 or the piston pin 120 can be inserted.

The motive power transmission mechanism 90 transmits the motive power of the crankshaft 56 to the camshaft 142, so that the plurality of valves provided at the combustion chamber 114 are driven. The structure of the motive power transmission mechanism 90 will be described in detail.

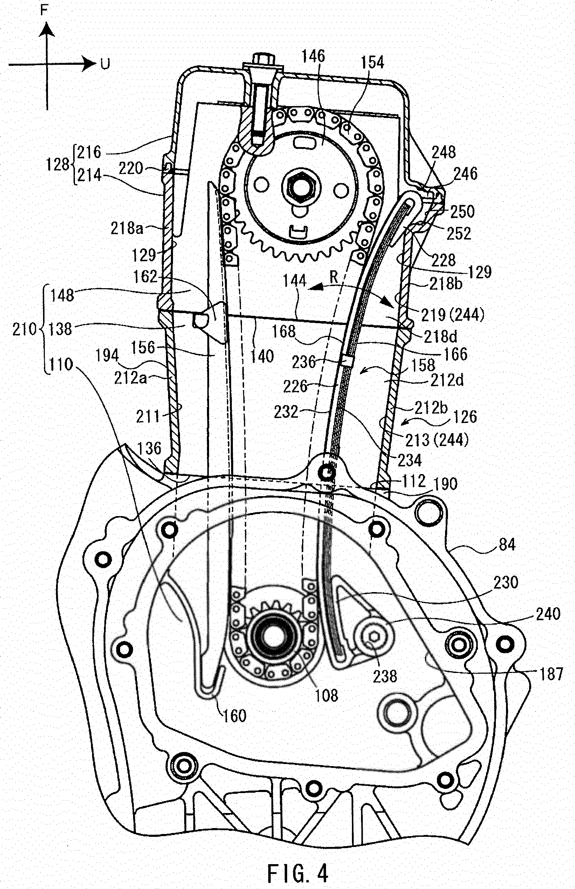

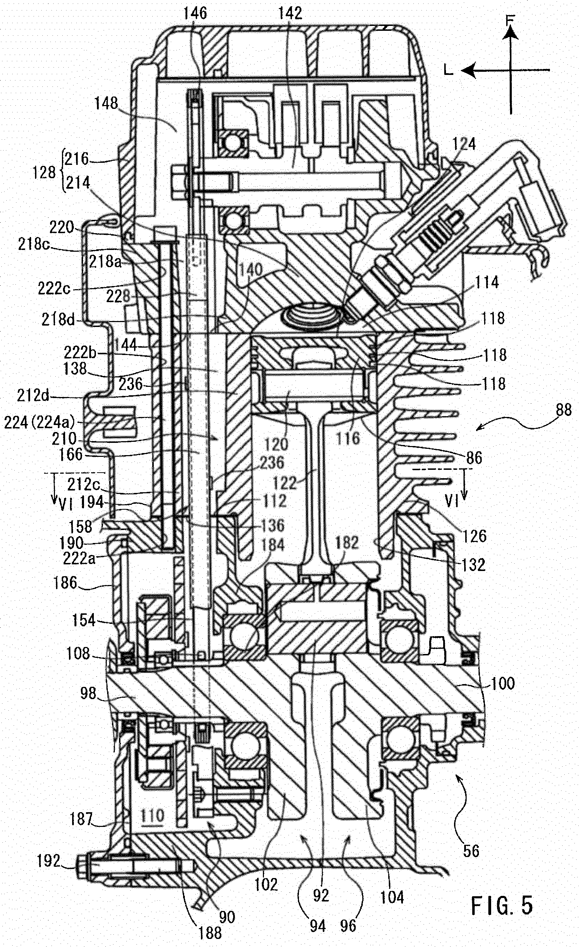

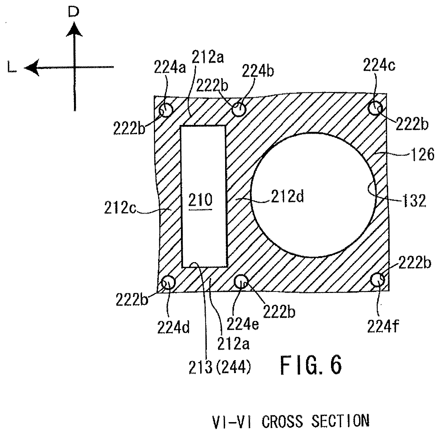

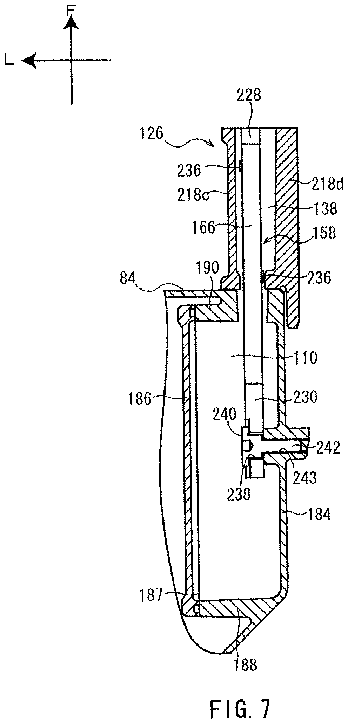

Referring to Figs. 4 to 7, the motive power transmission mechanism 90 will be described. Fig. 4 is a partly sectional view of a chain chamber 210 as viewed from the left. Fig. 5 is a top sectional view showing a part of Fig. 2 being enlarged. Fig. 6 is a sectional view taken along VI-VI in Fig. 5. Fig. 7 is a top sectional view showing how a tensioner 158 is attached. The arrow F in Figs. 4, 5, and 7 indicates the forward direction of the vehicle, the arrow U in Fig. 4 indicates the upward direction of the vehicle, the arrow L in Figs. 5 and 7 indicates the leftward direction, and the arrow D in Fig. 6 indicates the downward direction.

As shown in Figs. 4 and 5, the motive power transmission mechanism 90 is stored in the chain chamber 210. The motive power transmission mechanism 90 has a first sprocket 108, a second sprocket 146, a cam chain 154, a chain guide 156, and the tensioner 158.

The chain chamber 210 is provided on the left side of the piston 86. The chain chamber 210 has a first space 110 provided in the crankcase 84, a second space 138 provided in the cylinder body 126, and a third space 148 provided in the cylinder head 128.

The first space 110 stores the first sprocket 108. The first space 110 extends in a direction orthogonal to a straight line connecting an axial center of the crankshaft 56 and an axial center of the camshaft 142 when viewed in an axial direction of the crankshaft 56, i.e., in a direction orthogonal to the surface of the sheet of Fig. 5 (up-down direction). In other words, the space extends in a direction orthogonal to a plane including the crankshaft 56 and the camshaft 142. The first space 110 is surrounded by a first wall 184, a second wall 186, a third wall 188, a fourth wall 190 and the like. The first space 110 is covered with the crankcase 84 in the up-down direction. The first wall 184 is provided with a bearing 182 that supports the first crankshaft 98. As shown in Fig. 2, the second wall 186 is provided on the right side of the driving pulley 50. The third wall 188 connects the first wall 184 and the second wall 186. The fourth wall 190 has a first opening 112 through which the first space 110 is exposed. The second wall 186 is connected with the third wall 188 and the fourth wall 190 by a bolt 192. The second wall 186 covers an opening 187 formed at the crankcase 84. Fig. 4 shows the state in which the second wall 186 is removed and the opening 187 is visible.

The second space 138 is formed in a tubular part 194 of the cylinder body 126. The tubular part 194 has four walls 212a to 212d. The walls 212a to 212d each extend in the front-back direction. The walls 212a to 212d are each formed integrally with an adjacent one among the walls 212a to 212d. The pair of walls 212a and 212b oppose each other in the up-down direction, and the pair of walls 212c and 212d oppose in the left-right direction (in the axial direction of the camshaft 142). A second opening 136 overlapping the first opening 112 is formed at one end of the tubular part 194. A third opening 140 that exposes the second space 138 is formed at the other end of the tubular part 194. The tubular part 194 is open only at the above described two ends. The tubular part 194 is in communication with the outside of the second space 138 only at these two ends. The first space 110 and the second space 138 are connected through the first opening 112 and the second opening 136. Stated differently, the first space 110 is connected to the second space 138 through one end of the tubular part 194. The second space 138 is provided on the left side of the cylinder bore 132. The second space 138 is a space having a rectangular section.

The third space 148 stores the second sprocket 146 attached at an end of the camshaft 142. The fourth opening 144 overlapping the third opening 140 is formed at the end of the cylinder head 128. The second space 138 and the third space 148 are connected through the third and fourth openings 140 and 144. More specifically, the third space 148 is connected to the second space 138 through the other end of the tubular part 194.

As shown in Figs. 4 and 5, the cylinder head 128 includes a cylinder head main body 214 and a head cover 216. The cylinder head main body 214 has the fourth opening 144 and is attached to the cylinder body 126.

The cylinder head main body 214 has four walls 218a to 218d. The walls 218a to 218d extend in the front-back direction. The walls 218a to 218d are each formed integrally with an adjacent one among the walls 218a to 218d. A rear end of each of the walls 218a to 218d is placed on the cylinder body 126. A pair of walls 218a and 218b among the four walls 218a to 218d opposes each other in the up-down direction and a pair of walls 218c and 218d opposes each other in the left-right direction (the axial direction of the camshaft 142).

The head cover 216 covers a front end of the cylinder head main body 214. The head cover 216 forms the third space 148 together with the cylinder head main body 214. Seal rubber 220 is provided between the cylinder head main body 214 and the head cover 216. In this way, sealability between the cylinder head main body 214 and the head cover 216 is secured.

The cylinder head main body 214, the cylinder body 126, and the crankcase 84 have through holes 222a to 222c, respectively. The through hole 222a of the crankcase 84 has one end opened at the inner side of the crankcase 84 and the other end opened at the joining surface with the cylinder body 126. The through hole 222b of the cylinder body 126 has one end opened at the joining surface with the crankcase 84 and the other end opened at the joining surface with the cylinder head main body 214. The through hole 222c of the cylinder head main body 214 has one end opened at the joining surface with the cylinder head main body 214 and the other end opened at an end surface on the side of the head cover 216. The through holes 222a of the crankcase 84 and the through hole 222b of the cylinder body 126 are connected. The through hole 222b of the cylinder body 126 and the through hole 222c of the cylinder head main body 214 are connected. The three through holes 222a to 222c are aligned in the front-back direction. The three through holes 222a to 222c have a bolt 224 inserted therein. The bolt 224 is screwed to the crankcase 84, so that the crankcase 84, the cylinder body 126, and the cylinder head main body 214 are coupled. The bolt 224 prevents the crankcase 84, the cylinder body 126, and the cylinder head main body 214 from being shifted in position in a direction orthogonal to the front-back direction.

The crankcase 84, the cylinder body 126, and the cylinder head main body 214 are for example each made of an aluminum alloy. The bolt 224 is made of a material having a smaller thermal expansion coefficient than the material used for the crankcase 84, the cylinder body 126, and the cylinder head main body 214. An example of such a material includes steel.

As shown in Fig. 6, six bolts 224a to 224f are provided according to the embodiment. Figs. 2 and 5 show the bolt 224a. The three bolts 224a to 224c are positioned more on the lower end side than chain chamber 210 and the cylinder bore 132 when viewed in the front-back direction (the direction perpendicular to the surface of the sheet of Fig. 6). The three bolts 224d to 224f are positioned more on the upper end side than the chain chamber 210 and the cylinder bore 132 when viewed in the front-back direction. The two bolts 224a and 224d are poisoned more on the left side than the chain chamber 210 when viewed in the front-back direction. The two bolts 224b and 224e are positioned on the right side of the chain chamber 210 and on the left side of the cylinder bore 132 when viewed in the front-back direction. The two bolts 224c and 224f are positioned on the right side of the cylinder bore 132 when viewed in the front-back direction. The four bolts 224a, 224b, 224d, and 224e surround the chain chamber 210 when viewed in the front-back direction. The four bolts 224b, 224c, 224e, and 224f surround the cylinder bore 132 when viewed in the front-back direction. The two bolts 224a and 224d are more apart from the cylinder bore 132 than the two bolts 224b and 224e when viewed in the front-back direction. Therefore, the two bolts 224a and 224d are less affected by heat than the two bolts 224b and 224e during the operation of the engine 44. The four bolts 224a, 224b, 224d, and 224e including the two bolts 224a and 224d are positioned to surround the chain chamber 210, so that the effect caused by the thermal expansion of the crankcase 84 and the cylinder head main body 214 (such as possible displacement between the crankcase 84 and the cylinder head main body 214, so that the tensioner 158 can no longer provide tension as intended to the cam chain 154) can be further reduced.

The first sprocket 108 is attached to the first crankshaft 98. The first sprocket 108 is provided adjacent to the first crank web 94. The first sprocket 108 is a disk shaped member.

The second sprocket 146 is a disk shaped member having a larger diameter than the first sprocket 108. The second sprocket 146 is attached to the camshaft 142 by a bolt.

The cam chain 154 transmits motive power from the first sprocket 108 to the second sprocket 146. The cam chain 154 is wrapped around the first and second sprockets 108 and 146. The cam chain 154 is provided in the first, second, and third spaces 110, 138, and 148. The cam chain 154 is a silent chain according to the embodiment.

The chain guide 156 guides the cam chain 154. The chain guide 156 is provided over the first, second, and third spaces 110, 138, and 148. The chain guide 156 is supported by a first guide support 160 stored in the crankcase 84 and a second guide support 162 attached to the cylinder body 126. Note that the second guide support 162 is provided at the chain guide 156. The chain guide 156 is formed by bending a plate shaped member and printing rubber on the bent material. The chain guide 156 extends in a direction from the first space 110 to the third space 148. Stated differently, the chain guide 156 extends in the front-back direction. The chain guide 156 has one end extended to the vicinity of the camshaft 142 as the rotation center of the second sprocket 146. The chain guide 156 has the other end extended to the vicinity of the crankshaft 56 as the rotation center of the first sprocket 108.

The tensioner 158 provides the cam chain 154 with tension. The tensioner 158 is provided over the first space 110, the second space 138, and the third space 148. The tensioner 158 has a plate spring 166 and a blade shoe 168.

The plate spring 166 elastically deforms in response to force received from the cam chain 154. The plate spring 166 is for example made of spring steel and has a rectangular shape. According to the embodiment, the plate spring 166 includes a plurality of plate springs joined to each other. Note that the plate spring 166 may consist of a single plate spring.

The plate spring 166 curves in an arch shape when external force is not applied. The plate spring 166 elastically deforms when external force acts in its thickness-wise direction (in a direction in which the plurality of plate springs are joined to each other or in the up-down direction as shown in Fig. 4).

The blade shoe 168 is attached to the plate spring 166. The blade shoe 168 supports the plate spring 166. The blade shoe 168 allows the plate spring 166 to elastically deform. The blade shoe 168 contacts the cam chain 154. The blade shoe 168 is made for example of a synthetic resin material. The blade shoe 168 includes a main body part 226, a supported part 228, and an attachment portion 230.

The main body part 226 extends along the plate spring 166. The main body part 226 has approximately the same size as that of the plate spring 166. The main body part 226 has a raised curve surface 232 and a recessed curve surface 234. The raised curve surface 232 is in contact with the cam chain 154 between the first and second sprockets 108 and 146. The plate spring 166 is provided along the recessed curve surface 234. The plate spring 166 elastically deforms when external force acts from the side of the raised curve surface 232 to the side of the recessed curve surface 234. As shown in Fig. 5, the main body part 226 includes a pair of support pieces 236. The pair of support pieces 236 is provided apart in the front-back direction. The pair of the support pieces 236 prevents the plate spring 166 from moving in the left-right direction and coming off from the blade shoe 168.

The supported part 228 is provided at one end of the main body part 226. The supported part 228 is in contact with the plate spring 166 and supports an end (front end) of the plate spring 166 together with the main body part 226. A tip end of the supported part 228 is in contact with the plate spring 166. A gap forms between the base end of the supported part 228 (the end coupled with the main body 226) and the front end of the plate spring 166. In this way, the front end of the plate spring 166 is allowed to move to the side of the front end of the main body part 226.

The attachment portion 230 is provided at the other end of the main body part 226. The attachment portion 230 is in contact with the plate spring 166 and supports the other end (rear end) of the plate spring 166 together with the main body part 226. The tip end part of the attachment portion 230 is in contact with the plate spring 166. A gap forms between the base end of the attachment portion 230 (the end coupled with the main body part 226) and the rear end of the plate spring 166. In this way, the rear end of the plate spring 166 is allowed to move to the rear end side of the main body part 226.

As shown in Fig. 7, the attachment portion 230 includes a support hole 238. A support shaft 240 is inserted into the support hole 238. The support shaft 240 is screwed to the crankcase 84. More specifically, a bolt portion 242 is formed at one end of the support shaft 240. A screw hole 243 is formed in the crankcase 84. The bolt portion 242 and the screw hole 243 serve to screw the support shaft 240 to the crankcase 84. As shown in Fig. 4, the support shaft 240 screwed to the crankcase 84 is positioned above the first sprocket 108. The support shaft 240 extends approximately parallel to the crankshaft 56.

While the support shaft 240 is inserted in the support hole 238, the tensioner 158 is allowed to swing around the support shaft 240. More specifically, the tensioner 158 can swing in a direction indicated by the arrow R in Fig. 4. In this state, the supported part 228 is in contact with the inner side surface of the cylinder head 128. Note that the supported part 228 may contact the cylinder body 126 while the tensioner 158 is able to swing around the support shaft 240.

As shown in Fig. 4, while the supported part 228 is in contact with an inner side surface 129 of the cylinder head 128, the plate spring 166 is held in a position apart from a slide surface 244. The slide surface 244 is a surface that defines an upper end of the chain chamber 210 in the inner circumferential surface 211 of the chain chamber 210. The slide surface 244 is a surface contacted by the supported part 228 while the tensioner 158 is allowed to swing around the support shaft 240. As will be described, the slide surface 244 is a surface contacted by the supported part 228 when the tensioner 158 is inserted into the chain chamber 210. The slide surface 244 includes an inner side surface 213 of the wall 212b of the tubular portion 94 and an inner side surface 219 of the wall 218b of the cylinder head main body 214. The inner side surface 219 of the slide surface 244 is contacted by the supported part 228 while a tension providing member is provided in a swingable manner around the support shaft 240.

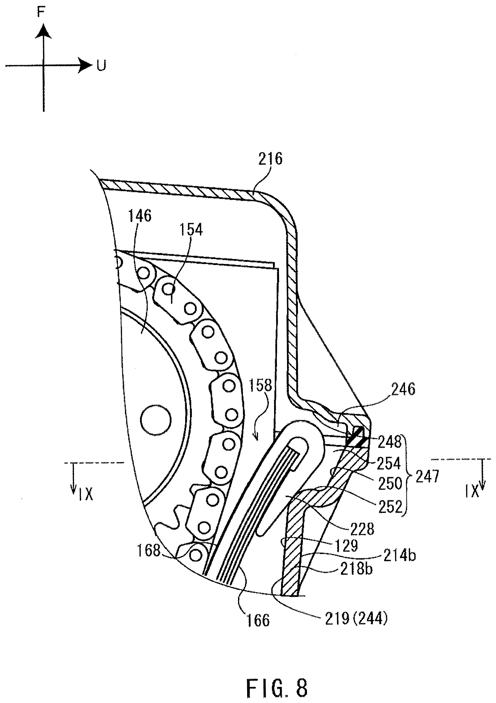

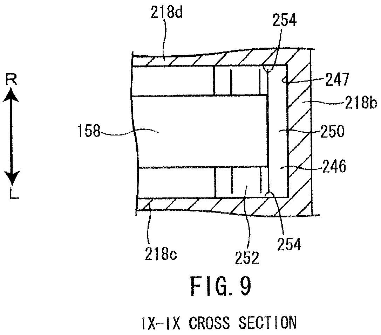

According to the embodiment, a recess 246 is formed at the cylinder head 128. Referring to Figs. 8 and 9, the recess 246 will be described. Fig. 8 is a left side sectional view showing a part of Fig. 4 being enlarged. Fig. 9 is a sectional view taken along IX-IX in Fig. 8.

As shown in Fig. 8, the base end of the supported part 228 enters the recess 246. In this state, a side surface of the supported part 228 contacts an edge of the recess 246.

The recess 246 is positioned above the second sprocket 146. As shown in Fig. 4, the recess 246 is positioned slightly shifted to the rear side from the rotation center of the second sprocket 146 when viewed from above. Stated differently, the recess 246 is positioned near the rotation center of the second sprocket 146 when viewed from above. The recess 246 is opened to the lower side.

As shown in Figs. 4 and 8, the recess 246 is opened to the inner side surface 129 of the cylinder head 128. An inner surface 247 of the recess 246 forms the inner side surface 129 of the cylinder head 128, i.e., the inner circumferential surface 211 of the chain chamber 210.

The recess 246 is formed at the cylinder head main body 214 and the head cover 216 across the joining part between the cylinder head main body 214 and the head cover 216. In this way, as compared to the case of forming the recess 246 either at the cylinder head main body 214 or at the head cover 216, the recess 246 may be formed more easily. Note that the recess 246 may be formed only at the cylinder head main body 214 or only at the head cover 216. The edge of the recess 246 contacted by the supported part 228 is formed at the wall 218b of the cylinder head main body 214.

The recess 246 includes an opposing surface 248 on the side of the head cover 216. The opposing surface 248 is opposed to the supported part 228 entered inside the recess 246. The opposing surface 248 is opposed to the supported part 228 in a direction in which the supported part 228 moves in the recess 246. The supported part 228 moves forward and obliquely upward in the recess 248. The opposing surface 248 expands in a direction approximately orthogonal to the moving direction of the supported part 228 in the recess 246. In this way, the supported part 228 in contact with the opposing surface 248 can be prevented from moving from the position and coming off from the recess 246. Note that the opposing surface 248 does not have to expand in a direction approximately orthogonal to the moving direction of the supported part 228 in the recess 246. For example, the opposing surface 248 that expands in a direction orthogonal to the front-back direction may be employed.

As shown in Figs. 8 and 9, the recess 246 includes a bottom surface 250 at the side of the cylinder head main body 214. The bottom surface 250 is formed in a position apart from the supported part 228 entered inside the recess 246. In this way, the supported part 228 entered inside the recess 246 can contact the opposing surface 248 without contacting the bottom surface 250.

The recess 246 includes a side surface 252 on the side of the cylinder head main body 214. The side surface 252 is positioned more on the side of the second sprocket 146 than the bottom surface 250. The side surface 252 is positioned more on the side of the cylinder body 126 than the bottom surface 250. The side surface 252 expands in a direction orthogonal to the front-back direction. The bottom surface 250 is positioned on the side of one end of the side surface 252 (the side apart from the second sprocket 146). An edge of the recess 246 on the side of the cylinder head main body 214 is positioned on the side of the other end of the side surface 252 (the side nearer to the second sprocket 146).

As shown in Fig. 9, the recess 246 includes a pair of side surfaces 254. The side surfaces 254 oppose each other in the axial direction of the camshaft 142. The side surfaces 254 each expand in a direction orthogonal to the axial direction of the camshaft 142. The side surfaces 254 are each formed in a position apart from the supported part 228 inside the recess 246.

The supported part 228 has its side surface in contact with an edge of the recess 246 on the side of the cylinder head main body 214 while its base end is inside the recess 246. More specifically, the supported part 228 is in contact with the wall 218b of the cylinder head main body 214. As can be clearly seen from the above, according to the embodiment, the wall 218b of the cylinder head main body 214 serves as a support part and the inner side surface 219 of the wall 218b serves as a support surface.

While the supported part 228 is inside the recess 246, a gap forms between the supported part 228 and the bottom surface 250. A gap also forms between the supported part 228 and each of the side surfaces 254. More specifically, the supported part 228 is apart from the inner surface 247 of the recess 246 while being inside the recess 246.

The wall 218b having an inner side surface 219 that serves as a support surface is integrally formed with the pair of walls 218c and 218d opposed to each other in the left-right direction as shown in Fig. 9. Stated differently, the inner side surface 219 is integrally provided with the pair of walls 218c and 218d. While the supported part 228 is in contact with the inner side surface 219, the tensioner 158 overlaps the pair of walls 218c and 218d in the left-right direction.

Now, referring to Figs. 2 and 3, how motive power from the engine 44 is transmitted to the rear wheel will be described.

To start with, the crankshaft 56 rotates. As the crankshaft 56 rotates the first sprocket 108 attached to the crankshaft 56 rotates. The motive power of the sprocket 108 is transmitted to the second sprocket 146 through the cam chain 154. As the second sprocket 146 rotates, the camshaft 142 rotates. As the camshaft 142 rotates, a plurality of valves is driven. Simultaneously with the driving of the plurality of valves, the piston 86 is driven by the rotation of the crankshaft 56. In this way, air is taken into the combustion chamber 114. Then, fuel is supplied to the combustion chamber 114 from the fuel supply device. Then, as the crankshaft 56 rotates, an air-fuel mixture is compressed, and the fuel mixture of air and fuel is ignited. As the air-fuel mixture is burnt, the piston head 116 moves and the crankshaft 56 rotates to drive the valves. The valves are driven, which discharges exhaust gas from the combustion chamber 114 to the outside. Note that at the starting of the engine 44, the crankshaft 56 rotates with motive power from a starter which is not shown.

As the crankshaft 56 rotates, the motive power rotates the driving pulley 50 of the transmission 46. The motive power of the driving pulley 50 is transmitted to the driven pulley 52 through the V belt 54. As the rotation speed of the driven pulley 52 increases, the clutch shoe 80 of the centrifugal clutch 48 comes into contact with the clutch housing 78. Then, the motive power of the centrifugal clutch 48 is transmitted to the first output side shaft 70. The motive power transmitted to the first output side shaft 70 is transmitted to a second output side shaft 180 by a gear that is not shown, so that the motive power is transmitted to the rear wheel 16 from the second output side shaft 180.

### Attaching Operation

How to attach the cam chain 154 during assembly or maintenance of the engine 44 will be described in conjunction with Fig. 4.

To start with, the crankcase 84 is prepared. The cam chain 154 is wrapped around the first sprocket 108. The cylinder body 126 is attached to the crankcase 84. The chain guide 156 is attached. The cylinder head main body 214 is attached to the cylinder body 126. In this state, the second sprocket 146 is not attached to the camshaft 142. The cam chain 154 is wrapped around the second sprocket 146. The second sprocket 146 is attached to the camshaft 142. The head cover 216 is attached to the cylinder head main body 214 with the seal rubber 220 interposed therebetween. In this way, the chain chamber 210 including the first, second, and third spaces 110, 138, and 148 is formed. The chain chamber 210 is provided with the cam chain 154. The tensioner 158 is inserted into the chain chamber 210 from the side of the crankcase 84. More specifically, the tensioner 158 is entered into the chain chamber 210 from the opening 187. The tensioner 158 is moved forward. The tensioner 158 is inserted above the cam chain 154 in the chain chamber 210. At the time, the main body part 226 is positioned on the side of the cam chain 154 and the plate spring 166 is positioned on the side of the slide surface 244. The plate spring 166 is apart from the slide surface 244. The main body 226 is in contact with the cam chain 154. The supported part 228 moves from the side of the crankcase 84 to the cylinder head 128 while being in contact with the slide surface 244. The supported part 228 comes into the recess 246. If the supported part 228 comes into the recess 246 with excessive force, the supported part 228 contacts the opposing surface 248. This restricts the entering of the supported part 228 into the recess 246. As can be clearly understood from the above, according to the embodiment, the opposing surface 248 serves as a restricting portion. While the supported part 228 is in the recess 246, the support hole 238 is positioned near the screw hole 243. The tensioner 158 is moved so that the support hole 238 and the screw hole 243 are aligned. The support shaft 240 is screwed to the crankcase 84. In this way, the tensioner 158 is allowed to swing around the support shaft 240.

When the tensioner 158 is inserted into the chain chamber 210, the main body part 226 is in contact with the cam chain 154, and the supported part 228 contacts the slide surface 244. Reaction force from the cam chain 154 acts on the main body part 226 and reaction force from the slide surface 244 acts on the supported part 228. When the tensioner 158 is inserted into the chain chamber 210, large resistance acts on the tensioner 158. The tensioner 158 must be inserted into the chain chamber 210 against the resistance.

The supported part 228 must be moved inside the cylinder head 128. Therefore, while holding the attachment portion 230 with the hand, the tensioner 158 must be inserted into the chain chamber 210. As a result, the support hole 238 is blocked from sight by the hand. Therefore, it would be difficult to insert the tensioner 158 into the chain chamber 210 while trying to align the support hole 238 and the screw hole 243.

In addition, the tubular part 194 has the wall 212c and the cylinder head main body 214 has the wall 218c. Therefore, the supported part 228 of the tensioner 158 inserted in the chain chamber 210 cannot be visually recognized.

According to the embodiment, when the tensioner 158 is inserted into the chain chamber 210, the supported part 228 is entered into the recess 246. The supported part 228 entered into the recess 246 does not contact a surface other than the opposing surface 248. Therefore, when the supported part 228 enters the recess 246, resistance acting on the tensioner 158 abruptly drops. While the supported part 228 is in the recess 246, the support hole 238 is positioned near the screw hole 243. Therefore, an operator needs only insert the tensioner 158 into the chain chamber 210 until the resistance acting on the tensioner 158 abruptly drops.

While the supported part 228 is in the recess 246, the support hole 238 is positioned near the screw hole 243. When the support hole 238 and the screw hole 243 are aligned, resistance acting on the tensioner 158 is smaller than that acting thereon before the supported part 228 is entered into the recess 246. Therefore, the support hole 238 and the screw hole 243 are aligned more easily. As a result, the tensioner 158 can be provided more easily in a swingable manner around the support shaft 240.

If the supported part 228 enters the recess 246 with excessive force, the supported part 228 contacts the opposing surface 248. In this way, the operator can determine that the tensioner 158 cannot be moved further beyond the position. If the supported part 228 is in contact with the opposing surface 248, the supported part 228 is still inside the recess 246, and therefore the support hole 238 is positioned near the screw hole 243. This makes it easier to align the support hole 238 and the screw hole 243.

According to the embodiment, only the tensioner 158 is a necessary member for providing the cam chain 154 with tension. This reduces the number of parts.

According to the embodiment, the support part is integrally formed with the cylinder head 128. In this way, strength is easily secured for the support part.

According to the embodiment, the support part includes the support surface contacted by the supported part 228 and the pair of walls 218c and 218d with the tensioner 158 therebetween and the support surface and the pair of walls 218c and 218d are integrally formed. In this way, strength for the support surface is more easily secured. The wall 218b having the support surface does not have to have a thickness larger than necessary.

According to the embodiment, the pair of walls 218c and 218d is provided to overlap the tensioner 158 when viewed in the axial direction of the crankshaft 56 or in the left-right direction. In this case, the movement of the tensioner 158 in the left-right direction can be restricted.

According to the embodiment, the cylinder head 128 is provided with the support part, and the support surface is formed at the inner circumferential surface 211 that forms the chain chamber 210. In this way, an additional member used to form such a support part is not necessary. This reduces the number of necessary parts.

According to the embodiment, either the supported part 228 or the support hole 238 is provided at one end of the tensioner 158 and the other is provided at the other end of the tensioner 158. In this way, the interval between the supported part 228 and the support hole 238 increases. This makes it easier for the plate spring 166 to elastically deform if external force acting upon the plate spring 166 is small.

According to the embodiment, the bolt 224 is provided to couple the crankcase 84, the cylinder body 126, and the cylinder head 128, and the bolt 224 has a smaller thermal expansion coefficient than those of the crankcase 84, the cylinder body 126 and the cylinder head 128. The screw hole 243 to which the support shaft 240 is fixed is provided at the crankcase 84. The inner side surface 219 is formed at the cylinder head main body 214. When the crankcase 84 and the cylinder head main body 214 are shifted from each other, tension as intended may not be applied to the cam chain 154. During the operation of the engine 44, in particular, the entire engine 44 has high temperatures. Therefore, the crankcase 84 and the cylinder head main body 214 thermally expand, which would increase the possibility that these members are shifted from each other. Since the bolt 224 having a smaller thermal expansion coefficient than those of the crankcase 84, the cylinder body 126, and the cylinder head 128 is employed, the effect of the thermal expansion can be reduced.

According to the embodiment, a restricting portion that restricts the movement of the tensioner 158 in its insertion direction is formed at the inner circumferential surface 211 of the chain chamber 210 during assembly by inserting the tensioner 158 into the chain chamber 210. In this case, the tensioner 158 contacts the restricting portion. Therefore, an operator can determine that the tensioner 158 cannot be inserted further beyond the position. If the tip end of the tensioner 158 inserted into the chain chamber 210 cannot be visually recognized, the operator can determine how much the tensioner 158 may be inserted into the chain chamber 210.

According to the embodiment, the inner circumferential surface 129 of the cylinder head 128 has the recess 246 and the inner surface 247 of the recess 246 serves as a restricting portion. When the tensioner 158 comes into the recess 246, resistance acting on the tensioner 158 abruptly decreases. If the tip end of the tensioner 158 inserted in the chain chamber 210 cannot be visually inspected, the operator can determine how much the tensioner 158 may be inserted into the chain chamber 210.

According to the embodiment, the recess 246 includes the opposing surface 248 that is opposed to the end of the tensioner 158 in the direction in which the tensioner 158 is entered into the recess 246 and the opposing surface 248 serves as a restricting portion. In this way, the restricting portion can be formed easily.

According to the embodiment, the cylinder head 128 includes the cylinder head main body 214 and the head cover 216 attached to the cylinder head main body 214 to form the third space together with the cylinder head main body 214, and the restricting portion is formed at the head cover 216. In this way, the restricting portion can be formed easily.

The motorcycle 10 according to the embodiment includes the above-described engine 44. Therefore, the number of necessary members to provide the cam chain 154 with tension can be reduced. It is easy to determine how much the tensioner 158 should be entered into the chain chamber 210 when the tensioner 158 is inserted into the chain chamber 210.

### Second Embodiment

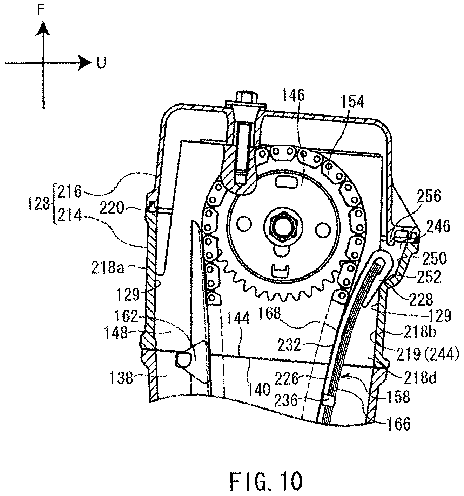

Referring to Fig. 10, a second embodiment of the present invention will be described. Fig. 10 is a sectional view of a part of the chain chamber 210 when viewed from the left.

The part of the recess 246 contacted by the tensioner 158 is not limited to the inner surface. For example, as shown in Fig. 10, the head cover 216 may be provided with a projection 256 and the projection 256 may be contacted by the tensioner.

The projection 256 projects to the side of the cylinder head main body 214 from the inner surface of the head cover 216. The projection 256 extends along the inner surface of the head cover 216. The projection 256 extends into the recess 246 from an edge of the recess 246 on the side of the head cover 216.

The supported part 228 entered into the recess 246 contacts the projection 256. In this way, the entering of the supported part 228 into the recess 246 is restricted. As can be clearly understood from the above, according to the embodiment, the projection 256 serves as a restricting portion.

According to the embodiment, the restricting portion is formed as the projection 256 that projects to the side of the cylinder head main body 214 from the inner surface of the head cover 216. In this case, the height of the projection 256 may be adjusted, so that how much the tension providing member enters the recess 246 can be adjusted.

### Third Embodiment

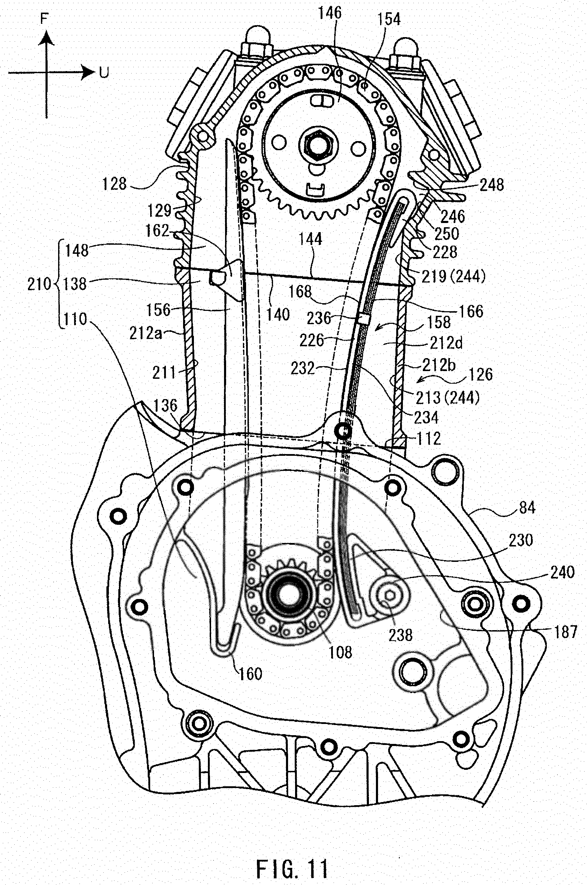

Referring to Fig. 11, a third embodiment of the present invention will be described. Fig. 11 is a partly sectional view of the chain chamber 210 as viewed from the left.

The cylinder head 128 does not have to include the cylinder head main body 214 and the head cover 216. For example, as shown in Fig. 11, the cylinder head may include the cylinder head main body and the head cover that are integrally formed.

According to the embodiment, the motorcycle 10 has one cylinder 88 by way of illustration, but the present invention is not limited to the arrangement and may be applied to a motorcycle having a plurality of cylinders.

According to the embodiment, the motorcycle 10 has one camshaft 142 but the invention is not limited to the arrangement and can be applied to a motorcycle having two camshafts.

According to the embodiment, the motorcycle has been described but the invention can be applied to a three- or four- wheeled leaning vehicle or the like.

In the foregoing, although the embodiments of the present invention have been described, it is clearly understood that the same is by way of illustration and example only and is not to be taken by way of limitation. The invention can be carried out in various modified forms without departing from the scope of the invention.

## Claims

1. An engine (44) having a chain chamber (210), comprising:
a crankshaft (56);
a camshaft (142);
a first sprocket (108) attached to said crankshaft (56);
a second sprocket (146) attached to said camshaft (142);
a crankcase (84) that stores said first sprocket (108);
a cylinder body (126) attached to said crankcase (84);
a cylinder head (128) attached to said cylinder body (126) to store said second sprocket (146);
a chain (154) wrapped around said first and second sprockets (108, 146); and
a tension providing member (158) that provides said chain (154) with tension,
said crankcase (84), said cylinder body (126), and said cylinder head (128) forming said chain chamber (210) that stores said chain (154) and said tension providing member (158),
said tension providing member (158) comprising:
a plate spring member (166); and
a contact member (168) that supports said plate spring member (166) and contacts said chain (154) in said chain chamber (210),
said engine (44) further comprising:
a support shaft (240) inserted through a support hole (238) formed at said contact member (168) to support said tension providing member (158) in a swingable manner,
**characterized in that**
said engine (44) further comprises:
a support part (218b) that supports said tension providing member (158) by contacting a supported part (228) formed at said contact member (168),
said support part (218b) supporting said supported part (228) so that said supported part (228) can slide in said chain chamber (210) when said tension providing member (158) swings around said support shaft (240),
said support part (218b) comprises:
a support surface (219) contacted by said supported part (228); and
a pair of opposite walls (218c, 218d) provided to have said tension providing member (158) therebetween, the support surface (219) extending between the opposite walls (218c, 218d) and
said support surface (219) and said pair of opposite walls (218c, 218d) are provided integrally, and
said support part (218b) is integrally formed with one of said cylinder body (126) and said cylinder head (128).

2. The engine according to claim 1, wherein said pair of opposite walls (218c, 218d) is provided to overlap said tension providing member (158) when viewed in an axial direction of said crankshaft (56).

3. The engine (44) according to any one of claims 1 or 2, wherein said support part (218b) is provided at one of said cylinder head (128) and said cylinder body (126), and
said support surface (219) is formed at an inner circumferential surface (211) that forms said chain chamber (210).

4. The engine (44) according to any one of claims 1 to 3, wherein one of said supported part (228) and said support hole (238) is provided at one end of said tension providing member (158) and the other is provided at the other end of said tension providing member (158).

5. The engine (44) according to any one of claims 1 to 4, further comprising a bolt (224) that couples said crankcase (84), said cylinder body (126), and said cylinder head (128), said bolt (224) having a smaller thermal expansion coefficient than those of said crankcase (84), said cylinder body (126), and said cylinder head (128).

6. The engine (44) according to claim 3, wherein when said tension providing member (158) is inserted into said chain chamber (210) for assembling, a restricting part (247; 248; 256) is formed at said inner circumferential surface (211), said restricting part (247; 248; 256) restricting movement of said tension providing member (158) in an insertion direction.

7. The engine (44) according to claim 6, wherein said inner circumferential surface (211) of said cylinder head (128) and said cylinder body (126) has a recess (246) and an inner surface (247) of said recess (246) serves as said restricting part (247).

8. The engine (44) according to claim 7, wherein said recess (246) includes an opposing surface (248) opposed to an end of said tension providing member (158) in a direction in which said tension providing member (158) enters said recess (246), and
said opposing surface (248) serves as said restricting part (248).

9. The engine (44) according to any one of claims 6 to 8, wherein said cylinder head (128) comprises:
a cylinder head main body (214), and
a head cover (216) attached to said cylinder head main body (214) to form said third space (148) together with said cylinder head main body (214), and
said restricting part (247; 248; 256) is formed at said head cover (216).

10. The engine (44) according to claim 9, wherein said restricting part (256) projects to a side of said cylinder head main body (214) from an inner surface of said head cover (216).

11. The engine (44) according to any one of claims 1 to 10, wherein said cylinder body (126) has a tubular part that forms a part of said chain chamber (210).

12. A saddle riding type vehicle (10) comprising an engine (44) according to any one of claims 1 to 11.

## Patentansprüche

1. Motor (44) mit einem Kettenschacht (210) umfassend:
eine Kurbelwelle (56);
eine Nockenwelle (142);
ein erstes Kettenrad (108), das an der Kurbelwelle (56) befestigt ist;
ein zweites Kettenrad (146), das an der Nockenwelle (142) befestigt ist;
ein Kurbelgehäuse (84), in dem das erste Kettenrad (108) angeordnet ist;
einen Zylinderkörper (126), der an dem Kurbelgehäuse (84) befestigt ist;
einen Zylinderkopf (128), der an dem Zylinderkörper (126) befestigt ist, um das zweite Kettenrad (146) aufzunehmen;
eine Kette (154), die um das erste und zweite Kettenrad (108, 146) gewunden ist; und
ein Spannungsbereitstellungselement (158), das die Kette (154) mit Spannung versieht,
wobei das Kurbelgehäuse (84), der Zylinderkörper (126) und der Zylinderkopf den Kettenschacht (210) bilden, der die Kette (154) und das Spannungsbereitstellungselement (158) aufnimmt,
wobei das Spannungsbereitstellungselement (158) umfasst:
ein Blattfederelement (166); und
ein Kontaktelement (168), das das Blattfederelement (166) lagert und mit der Kette (154) in dem Kettenschacht (210) in Kontakt steht,
wobei der Motor (44) des Weiteren umfasst:
eine Lagerwelle (240), die durch eine Lageröffnung (238) eingesetzt ist, welche an dem Kontaktelement (168) ausgebildet ist, um das Spannungsbereitstellungselement (158) auf schwenkbare Weise zu lagern,
**dadurch gekennzeichnet, dass**
der Motor (44) des Weiteren umfasst:
einen Lagerteil (218b), der das Spannungsbereitstellungselement (158) lagert, indem er mit einem gelagerten Teil (228) in Kontakt steht, der an dem Kontaktelement (168) ausgebildet ist,
wobei der Lagerteil (218b) den gelagerten Teil (228) so lagert, dass der gelagerte Teil (228) in den Kettenschacht (210) gleiten kann, wenn das Spannungsbereitstellungselement (158) um die Lagerwelle (240) schwingt,
wobei der Lagerteil (218b) umfasst:
eine Lagerfläche (219), die mit dem gelagerten Teil (228) in Kontakt steht; und
ein Paar von gegenüberliegenden Wänden (218c, 218d), die so angeordnet sind, dass sich dazwischen das Spannungsbereitstellungselement (158) befindet, wobei sich die Lagerfläche (219) zwischen den gegenüberliegenden Wänden (218c, 218d) erstreckt, und
die Lagerfläche (219) und das Paar von gegenüberliegenden Wänden (218c, 218d) integral ausgebildet sind, und
der Lagerteil (218b) integral mit einem aus dem Zylinderkörper (126) und dem Zylinderkopf (128) ausgebildet ist.

2. Motor nach Anspruch 1, wobei das Paar von gegenüberliegenden Wänden (218c, 218b) so angeordnet ist, dass es das Spannungsbereitstellungselement (158) überlappt, betrachtet in einer axialen Richtung der Kurbelwelle (56).

3. Motor (44) nach einem der Ansprüche 1 oder 2, wobei der Lagerteil (218b) an einem aus dem Zylinderkopf (128) und dem Zylinderkörper (196) ausgebildet ist und die Lagerfläche (219) an einer Innenumfangsfläche (211) ausgebildet ist, welche den Kettenschacht (210) bildet.

4. Motor (44) nach einem der Ansprüche 1 bis 3, wobei eines aus dem gelagerten Teil (228) und der Lageröffnung (238) an einem Ende des Spannungsbereitstellungselements (158) angeordnet ist und das andere an dem anderen Ende des Spannungsbereitstellungselements (158) angeordnet ist.

5. Motor (44) nach einem der Ansprüche 1 bis 4, des Weiteren umfassend eine Schraube (224), die das Kurbelgehäuse (84), den Zylinderkörper (126) und den Zylinderkopf (128) miteinander verbindet, wobei die Schraube (294) einen kleineren Wärmeausdehnungskoeffizienten als das Kurbelgehäuse (84), der Zylinderkörper (126) und der Zylinderkopf (128) aufweist.

6. Motor (44) nach Anspruch 3, wobei, wenn das Spannungsbereitstellungselement (158) zur Montage in den Kettenschacht (210) eingesetzt wird, ein Begrenzungsteil (247; 248; 256) an der Innenumfangsfläche (211) ausgebildet ist, wobei der Begrenzungsteil (247; 248; 256) eine Bewegung des Spannungsbereitstellungselements (158) in einer Einschubrichtung begrenzt.

7. Motor (44) nach Anspruch 6, wobei die Innenumfangsfläche (211) des Zylinderkopfes (128) und des Zylinderkörpers (126) eine Vertiefung (246) aufweist und eine Innenseite (247) der Vertiefung (246) als der Begrenzungsteil (247) dient.

8. Motor (44) nach Anspruch 7, wobei die Vertiefung (246) eine gegenüberliegende Fläche (248) gegenüber einem Ende des Spannungsbereitstellungselements (158) in einer Richtung aufweist, in der das Spannungsbereitstellungselement (158) in die Vertiefung (246) eintritt, und die gegenüberliegende Fläche (248) als der Begrenzungsteil (248) dient.

9. Motor (44) nach einem der Ansprüche 6 bis 8, wobei der Zylinderkopf (128) umfasst:
einen Zylinderkopfhauptkörper (214), und
eine Kopfabdeckung (216), die an dem Zylinderkopfhauptkörper (214) befestigt ist, um eine dritte Kammer (148) zusammen mit dem Zylinderkopfhauptkörper (214) zu bilden, und wobei der Begrenzungsteil (247; 248; 256) an der Kopfabdeckung (216) ausgebildet ist.

10. Motor (44) nach Anspruch 9, wobei der Begrenzungsteil (256) von einer Innenseite der Kopfabdeckung (216) zu einer Seite des Zylinderkopfhauptkörpers (214) vorsteht.

11. Motor (44) nach einem der Ansprüche 1 bis 10, wobei der Zylinderkörper (126) einen rohrförmigen Teil aufweist, der einen Teil des Kettenschachtes (210) bildet.

12. Fahrzeug (10) vom Typ, das im Sattel gefahren wird, umfassend einen Motor (44) nach einem der Ansprüche 1 bis 11.

## Revendications

1. Moteur (44) ayant une chambre de chaîne (210), comprenant :
un vilebrequin (56) ;
un arbre à cames (142) ;
un premier pignon (108) attaché audit vilebrequin (56) ;
un deuxième pignon (146) attaché audit arbre à cames (142) ;
un carter (84) qui reçoit ledit premier pignon (108) ;
un corps de cylindre (126) attaché audit carter (84) ;
une culasse (128) attachée audit corps de cylindre (126) pour recevoir ledit deuxième pignon (146) ;
une chaîne (154) enroulée autour desdits premier et deuxième pignons (108, 146) ; et
un élément d'alimentation de tension (158) qui fournit une tension à ladite chaîne (154),
ledit carter (84), ledit corps de cylindre (126) et ladite culasse (128) formant ladite chambre de chaîne (210) qui reçoit ladite chaîne (154) et ledit élément d'alimentation de tension (158),
ledit élément d'alimentation de tension (158) comprenant :
un élément de ressort à lame (166) ; et
un élément de contact (168) qui supporte ledit élément de ressort à lame (166) et est en contact avec ladite chaîne (154) dans ladite chambre de chaîne (210),
ledit moteur (44) comprenant en outre :
un arbre de support (240) inséré à travers un trou de support (238) formé dans ledit élément de contact (168) pour supporter ledit élément d'alimentation de tension (158) de manière pivotante,
**caractérisé en ce que**
ledit moteur (44) comprend en outre :
une partie de support (218b) qui supporte ledit élément d'alimentation de tension (158) en entrant en contact avec une partie supportée (228) formée sur ledit élément de contact (168),
ladite partie de support (218b) supportant ladite partie supportée (228) de telle sorte que ladite partie supportée (228) peut coulisser dans ladite chambre de chaîne (210) quand ledit élément d'alimentation de tension (158) pivote autour dudit arbre de support (240),
ladite partie de support (218b) comprend :
une surface de support (219) en contact avec ladite partie supportée (228) ; et
une paire de parois opposées (218c, 218d) pourvues pour qu'y soit intercalé ledit élément d'alimentation de tension (158), la surface de support (219) s'étendant entre les parois opposées (218c, 218d), et
ladite surface de support (219) et ladite paire de parois opposées (218c, 218d) sont pourvues de manière intégrée, et
ladite partie de support (218b) est formée de manière intégrée avec un élément parmi ledit corps de cylindre (126) et ladite culasse (128).

2. Moteur selon la revendication 1, dans lequel ladite paire de parois opposées (218c, 218d) est pourvue pour chevaucher ledit élément d'alimentation de tension (158), vu en direction axiale dudit vilebrequin (56).

3. Moteur (44) selon l'une quelconque des revendications 1 et 2, dans lequel ladite partie de support (218b) est pourvue sur un élément parmi ladite culasse (128) et ledit corps de cylindre (126), et
ladite surface de support (219) est formée sur une surface circonférentielle interne (211) qui forme ladite chambre de chaîne (210).

4. Moteur (44) selon l'une quelconque des revendications 1 à 3, dans lequel un élément parmi ladite partie supportée (228) et ledit trou de support (238) est pourvu à une extrémité dudit élément d'alimentation de tension (158) et l'autre élément est pourvu à l'autre extrémité dudit élément d'alimentation de tension (158).

5. Moteur (44) selon l'une quelconque des revendications 1 à 4, comprenant en outre un boulon (224) qui couple ledit carter (84), ledit corps de cylindre (126) et ladite culasse (128), ledit boulon (224) présentant un coefficient d'expansion thermique inférieur à ceux dudit carter (84), dudit corps de cylindre (126) et de ladite culasse (128).

6. Moteur (44) selon la revendication 3, dans lequel, quand ledit élément d'alimentation de tension (158) est inséré dans ladite chambre de chaîne (210) pour l'assemblage, une partie de restriction (247 ; 248 ; 256) est formée sur ladite surface circonférentielle interne (211), ladite partie de restriction (247 ; 248 ; 256) restreignant le déplacement dudit élément d'alimentation de tension (158) en direction d'insertion.

7. Moteur (44) selon la revendication 6, dans lequel ladite surface circonférentielle interne (211) de ladite culasse (128) et dudit corps de cylindre (126) comporte un évidement (246) et une surface interne (247) dudit évidement (246) sert de dite partie de restriction (247).

8. Moteur (44) selon la revendication 7, dans lequel ledit évidement (246) inclut une surface d'opposition (248) opposée à une extrémité dudit élément d'alimentation de tension (158) dans une direction dans laquelle ledit élément d'alimentation de tension (158) entre dans ledit évidement (246), et
ladite surface d'opposition (248) sert de dite partie de restriction (248).

9. Moteur (44) selon l'une quelconque des revendications 6 à 8, dans lequel ladite culasse (128) comprend :
un corps principal de culasse (214), et
un couvre-culasse (216) attaché audit corps principal de culasse (214) pour former ledit troisième espace (148) conjointement audit corps principal de culasse (214), et
ladite partie de restriction (247 ; 248 ; 256) est formée sur ledit couvre-culasse (216).

10. Moteur (44) selon la revendication 9, dans lequel ladite partie de restriction (256) se projette vers un côté dudit corps principal de culasse (214) à partir d'une surface interne dudit couvre-culasse (216).

11. Moteur (44) selon l'une quelconque des revendications 1 à 10, dans lequel ledit corps de cylindre (126) comporte une partie tubulaire qui forme une partie de ladite chambre de chaîne (210).

12. Véhicule du type à selle (10) comprenant un moteur (44) selon l'une quelconque des revendications 1 à 11.
